Europäisches Patentamt

European Patent Office

Office européen des brevets

(19)

(11) Publication number: **0 329 990 B1**

(12) **EUROPEAN PATENT SPECIFICATION**

(45) Date of publication of patent specification: **04.11.92**  (51) Int. Cl.⁵: **E21B 17/042**, F16L 58/18

(21) Application number: **89101808.7**

(22) Date of filing: **02.02.89**

(54) Oil-well tubing joints with anti-corrosive coating.

(30) Priority: **03.02.88 JP 22039/88**

(43) Date of publication of application:
**30.08.89 Bulletin 89/35**

(45) Publication of the grant of the patent:
**04.11.92 Bulletin 92/45**

(84) Designated Contracting States:
**DE FR GB SE**

(56) References cited:
**WO-A-85/03249**
**GB-A- 2 104 919**

(73) Proprietor: **NIPPON STEEL CORPORATION**
**6-3 Otemachi 2-chome Chiyoda-ku**
**Tokyo 100(JP)**

(72) Inventor: **Miyasaka, Akihiro c/o Nippon Steel**
**Corporation**
**R & D Laboratories-II, 5-10-1, Fuchinobe**
**Sagamihara City Kanagawa Prefecture(JP)**
Inventor: **Ogawa, Hiroyuki c/o Nippon Steel**
**Corporation**
**R & D Laboratories-II, 5-10-1, Fuchinobe**
**Sagamihara City Kanagawa Prefecture(JP)**
Inventor: **Inoue, Yasusuke c/o Nippon Steel**
**Corporation**
**R & D Laboratories-II, 5-10-1, Fuchinobe**
**Sagamihara City Kanagawa Prefecture(JP)**

(74) Representative: **Vossius & Partner**
**Siebertstrasse 4 P.O. Box 86 07 67**
**W-8000 München 86(DE)**

## Description

This invention relates to joints for oil-well tubing for use in the production of oil and natural gas, and more particularly to joints for high-alloy oil-well tubing that exhibit high corrosion resistance, more particularly high crevice-corrosion resistance, in environments in which $H_2S$, $CO_2$ and $Cl^-$ are present.

With the progressive decrease in oil and natural gas resources, oil and gas production has come to be carried out in severer environments containing $H_2S$, $CO_2$ and chlorides or involving high temperatures. Conventional carbon- and low-alloy-steel oil-well tubing cannot be used in such environments because the corrosion rate is as heavy as 10 mm per year or more. Corrosion inhibitors extensively used with carbon- and low-alloy-steel oil-well tubing are difficult to be used in offshore wells because of costs and limited space for operation. Under such circumstances, the use of high-alloy oil-well tubing, made of alloys containing higher percentages of Cr, Ni, Mo and other alloying elements, has recently increased.

For the production of oil and gas containing $CO_2$ but not $H_2S$, for example, 13% Cr steel and 9% Cr-1% Mo steel are widely used. For the production of oil and gas containing both $CO_2$ and minute amounts of $H_2S$, duplex stainless steels containing 22 to 25% of Cr are used. It is also known that Ni-Cr-Mo-Fe alloys containing, for example, more than 25% Ni, more than 20% Cr and more than 3% Mo exhibit high corrosion resistance in environments containing much $H_2S$.

Japanese Provisional Patent Publication Nos. 207142 of 1982 and 203740 of 1982 disclose alloys for use in severe environments containing large amount of $H_2S$. To those alloys, corrosion resistance is imparted by limiting the contents of such alloying elements as Ni, Cr, Mo and W. Rare earth elements, Y, Mg and Ca are added to enhance their hot workability.

In the alloy disclosed in Japanese Provisional Patent Publication No. 1044 of 1983, the contents of Cr, Mo, W, Ni and Mn are controlled to such limits as will impart high enough stress corrosion resistance in environments containing $H_2S$. While Cu and Co are added to increase corrosion resistance, rare earth elements, Y, Mg and Ca are added for the improvement of hot workability.

Oil and gas well environments containing $H_2S$, $CO_2$ and $Cl^-$ are heavily corrosive. High-alloy oil-well tubing of the above-described conventional types used in such environments are designed to withstand general corrosion and stress-corrosion cracking. But no consideration has been given to another form of corrosion known as crevice corrosion that occurs within a crevice.

Pieces of oil-well tubing are joined together with threaded joints. Each joint has a crevice at each end thereof surrounded by a high-alloy steel, with one end of the crevice opening toward a corrosive environment. The inventors studied the possibility of the occurrence of crevice corrosion in such threaded joints. From the studies, it was found that crevice corrosion can occur even on high-alloy steel as the service environment becomes severer. Indeed, occurrence of crevice corrosion on high-alloy steel is well-known, as was reported by Kudo et al, in "Tetsu to Hagane" vol. 73, No. 5, S, p.625 and vol. 73, No. 13, S, p.1387. Crevice corrosion in threaded joints can not only lead to stress-corrosion cracking but also damage the leak tightness of the joint, achievement of which is one of the important functions of the joint, by attacking the sealing surface thereof.

The inventors thoroughly analyzed the mechanism of crevice corrosion in environment containing $H_2S$, $CO_2$ and $Cl^-$ ions. The analytical study revealed that crevice corrosion in such environment results from the reaction between concentrated metal ions (especially chromium ions) dissolved from the high-alloy and concentrated $Cl^-$ ions from the environment, which drastically lowers the pH within the crevice to such an extent that the high-alloy steel can no longer maintain its corrosion resistance. Though initially remaining passive, high-alloy steel dissolves little by little in such environment, producing a concentration of metal ions within the crevice over a long time.

According to the studies of the inventors, it is extremely difficult to prevent such crevice corrosion in threaded joints by content adjustment of alloying metals. Even if possible, such adjustment would be prohibitively costly because crevice corrosion cannot be prevented unless corrosion resistance is enhanced beyond the limit adequate for the corrosive service environment in which the joint is to be used.

GB-A-2 104 919 discloses a chromium-containing steel joint for high-alloy oil-well tubing according to the preamble of claim 1. The joint according to GB-A-2 104 919 comprises a metal sealing portion and a threaded portion and is made of an alloy steel containing not less than 10% by weight of Cr. At least part of the surface of said metal sealing portion has applied thereto an activating layer of a first metal or an alloy, and an electrode deposited layer of a second metal or an alloy. The activating layer is firmly adhered to the steel surface by subjecting said surface to anodic electrolysis in an acidic aqueous solution and immediately thereafter to cathodic electrolysis. The amount of the electrodeposited layer on said activating layer is at least $2g/m^2$.

WO-A-85-03249 relates to an insulating coupling for drill collars. The coupling consists of an electrically insulating ceramic coating applied in a thickness from approximately 50 to 150 $\mu$m to the threads of the coupling. The ceramic coating preferably is aluminium oxide.

The object of this invention is to provide a threaded joint for high-alloy oil-well tubing in which no crevice corrosion occurs even in high-temperature and high-pressure environments containing $H_2S$, $CO_2$ and $Cl^-$ by means of a non-metallic coating provided in the critical areas of the joint. This object is achieved by the joint according to the claims.

As mentioned previously, crevice corrosion occurs when dissolved and concentrated metal ions and concentrated $Cl^-$ ions from the environment react to drastically lower the pH within a crevice to such an extent that high alloy can no longer remain corrosion resistant. After making studies on the inhibition of such crevice corrosion with such diverse approaches as alloying-element-content adjustment and environment control, the inventors found that crevice corrosion can be prevented by inhibiting the dissolution of metal ions through a coating of non-metallic substance around a crevice.

This invention is based on the above finding. Essentially, the invention relates to a threaded joint having high crevice-corrosion resistance for oil-well tubing of high-alloy containing not less than 7.5% by weight of Cr, in which those parts, including the sealing surface, of the joint that are directly exposed to a corrosive environment are covered with a coating of non-metallic substance 1 to 100 $\mu$m in thickness.

Non-metallic substances suited for the protective coating are such oxide ceramics as $TiO_2$, $Al_2O_3$, $ZrO_2$ and $Cr_2O_3$, such nitride ceramics as TiN, AlN, ZrN and BN, and such carbide ceramics as TiC and ZrC. These non-metallic substances effectively prevent crevice corrosion in aqueous solutions containing $H_2S$, $CO_2$ and $Cl^-$. The same oxide ceramics (e.g., $TiO_2$ and $TiO_2$) or different oxide ceramics (e.g., $TiO_2$ and $Al_2O_3$) may be coated in two or more layers. Whether applied in a single layer or in multiple layers, the coating may be made up of a mixture of different types of ceramics (e.g., $ZrO_2$ and $Cr_2O_3$). Even if different types of ceramics are mixed together, their effect in the prevention of crevice corrosion remains unchanged. The same applies to nitride and carbide ceramics, too.

The Cr content in the high-alloy coil-well tubing is limited to not lower than 7.5% because corrosion resistance sufficiently high to withstand a corrosive environment cannot be obtained under 7.5%, with resulting failure in forming a stable passive coating which, in turn, leads to general corrosion. Where general corrosion has occurred, no crevice corrosion occurs. The upper limit of Cr content is not specified. But alloy steel containing an excessive amount of (e.g., in excess of 32%) Cr is practically and commercially difficult to make. Other alloying elements than Cr are chosen depending on the severity of service environment. Ni, Mo, W, Cu, Co and Fe are among those which are added as needed. This invention covers all alloying steels containing not less than 7.5% of Cr, regardless of the kind and content of other alloying elements.

Coatings thinner than 1 $\mu$m cannot inhibit the dissolution of metal ions to such an extent as to permit adequate prevention of crevice corrosion. On the other hand, the preventing effect of the coating for crevice corrosion will no longer increase even if its thickness is made greater than 100 $\mu$m. That is not all. Such excessively heavy coatings would impair the dimensional accuracy of threads and cause seizure during make-up. As such, the thickness of a coating must be limited between 1 and 100 $\mu$m. A coating within the above thickness range may be formed either in single application or in multiple applications.

This invention provides high corrosion resistance to high-alloy oil-well tubing including threaded joints. The invention is described in detail in connection with the drawings in which

Fig. 1 is a partial longitudinal cross section of a threaded joint for high-alloy oil-well tubing covered with a coating of non-metallic substance;

Fig. 2 is an enlarged view showing the inner part of the same threaded joint; and

Fig. 3 is an enlarged view showing the outer part of the same threaded joint.

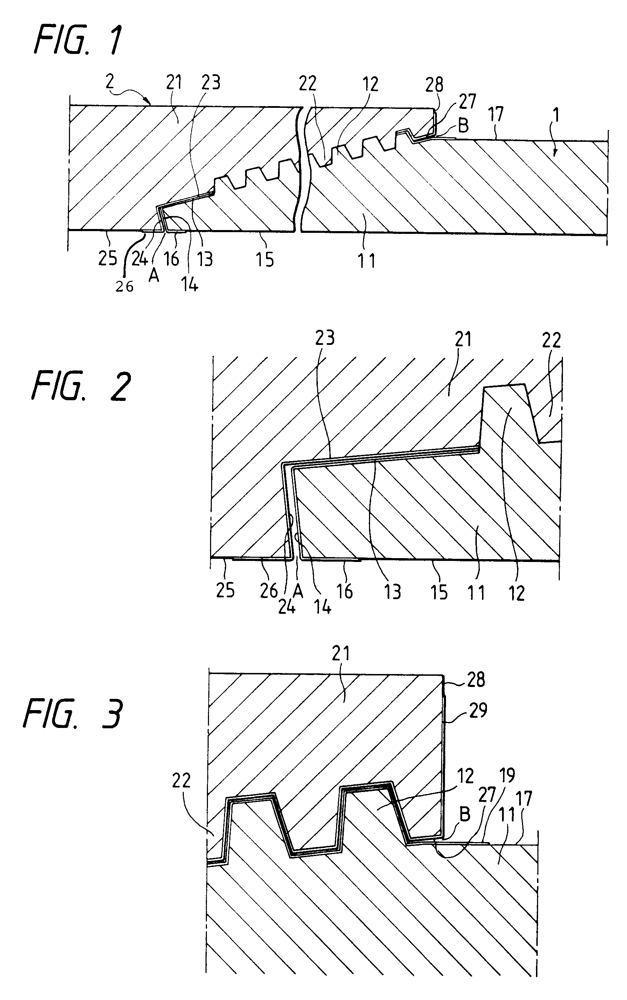

This invention is intended for oil-well tubing for highly corrosive oil and gas wells that are connected together by joints assuring particularly high leak tightness known as premium joints. Various types of highly leak-tight joints have been proposed and used. A threaded joint of the type illustrated in Fig. 1 is an example.

As shown in Fig. 1, a threaded joint is made up of a pin member 11 provided at the tip of an oil-well tube and a box member 21 provided at each end (only one end is shown in the figure) of a coupling (a short-length connecting tube) 2. A tapered external thread 12 is provided on the pin member 11. The pin member 11 has a tapered annular tip whose outside surface serves as a sealing surface 13. The box member 21 has a tapered internal thread 22 matched to said external thread 12. The innermost inside surface of the box member 21 serves as a sealing surface 23 mating with the sealing surface 13 of the pin member 11. The surface next to the sealing surface 23 of the box member 21 is an annular inner end face 24 perpendicular to the sealing surface 23. An end face 14 of the pin member 11 faces the inner end surface 24 of the box member 21. One coupling 2 joins together two oil-well tubes 1, with the pin member 11 at the tip of each tube 1 being screwed into the box member 21 at each end of the coupling 2. The sealing surface 13 of the pin member 11 and the sealing surface 23 of the box member 21 are brought into contact to provide the required leak tightness.

As mentioned previously, the high-alloy oil-well tubing to be connected together contain not less than 7.5% of Cr. One or more of such alloying elements as Ni, Mo, W, Cu, Co, Nb, Ca, Si, Mn and Fe may also be contained.

Some examples containing several alloying elements are given below. Ni and Mo are added to provide corrosion resistance. (Ni, in particular, provides sour-corrosion resistance.) Si and Mn are added for the purpose of deoxidation and securing adequate strength. Cu and N, respectively, enhance sour-corrosion resistance and strength. Lower contents of P and S are conductive to the securing of corrosion resistance.

A first example of high-alloy steel oil-well tubing contains (the percentages shown are all by weight):

(a) Cr: 7.5 - 14.0%, C: 0.25% max., Si: 1% max., Mn: 2.5% max., P: 0.004% max., S: 0.02% max., Al: 0.15% max.;

at least one of the following (b) and (c):

(b) one or more of Ni: 4% max., Mo: 2.5% max., and Cu: 1% max.

(c) N: 0.12% max.; and

Fe and ordinarily associated impurities.

In the above example, Cr content is limited between 7.5 and 14.0% to enhance carbon-dioxide corrosion resistance. The C content at 0.25% or less permits securing adequate strength. Addition of Al results in stronger deoxidation.

A second example of high-alloy oil-well tubing contains, by weight:

(a) Cr: 18.5 - 28.0%, Ni: 4.5 - 9.5%, Mo: 2.5 - 5.5%, C: 0.12% max., Si: 1% max., Mn: 2.5% max., P: 0.004% max., and S: 0.02% max.;

at least one of the following (b) and (c):

(b) Cu: 1% max.

(c) N: 0.20% max.; and

Fe and ordinarily associated impurities.

In this example, the higher Cr content between 18.5 and 28.0% enhances sour-corrosion resistance. The lower C content at 0.12% provides adequate corrosion resistance. A third example of high-alloy oil-well tubing contains, by weight:

(a) Cr: 14.5 - 28.0%, Ni: 20 - 62%, Mo: 2.5 - 18%, C: 0.12% max., Si: 1% max., Mn: 2.5% max., P: 0.004% max., and S: 0.02% max.;

at least one of the following (b) and (c):

(b) one or more of Cu: 1% max, Ti: 1.5% max., Nb: 5% max., and Ca: 0.02% max.

(c) N: 0.3% max.; and

Fe and ordinarily associated impurities.

In this example, the higher Cr content between 18.5 and 28.0% enhances sour-corrosion resistance, while the lower C content at 0.12% max. provides adequate corrosion resistance. Nb and Ca are added to increase strength and hot workability, respectively.

In a threaded joint of the type described previously, a clearance A is left between the end face 14 of the pin member 11 and the inner end face 24 of the box member 21 and a clearance B between the base of the pin member 11 and the tip (opposite to the inner portion) of the box member 21. Crevice corrosion occurs in such clearances as mentioned above. According to this invention, therefore, the end portions including the sealing surfaces which are directly exposed to corrosive environment are covered with a coating of non-metallic substance 1 to 100 $\mu$m in thickness. More specifically, the sealing surface 13, the end face 14 and a part of the internal surface 15 around at the tip of the pin member 11 are covered with a coating 16 of non-metallic substance, as shown in an enlarged view in Fig. 2. Similarly, the sealing surface 23, the inner end face 24 and a part of the internal surface 25 around the base of the box member 21 are covered with a coating 26 of non-metallic substance. Furthermore, the external surface 17 at the base of the pin member 11 and the internal surface 27 and the end surface 28 at the tip of the box member 21 are covered with a coating 29 of non-metallic substance, as shown in an enlarged view in Fig. 3. Consequently, the clearances A and B are enclosed with the coatings 16, 26, 19 and 29 of non-metallic substance.

For such coating, a non-metallic substance having sufficiently high corrosion resistance to withstand the corrosive service environment must be chosen. From a commercial viewpoint, no excessively costly substance can be used as the coating material. A suitable coating material may be chosen from among such oxides as $TiO_2$, $Al_2O_3$, $ZrO_2$ and $Cr_2O_3$, such nitrides as TiN, AlN, ZrN and BN, and such carbides as TiC and ZrC mentioned before.

The coating of non-metallic substance may be applied by any method so long as the specified thickness can be obtained. For example, ion plating, sputtering, CVD (chemical vapor deposition), plasma CVD and spraying may be employed. The coating of non-metallic substance need not be perfect or free of such defects as crevices and pores. The coating having some such defects is practically acceptable so long as the dissolution of metal irons can be held below the desired limit. But, of course, it is desirable to reduce such defects to a minimum because larger crevices or too many defects can impair the crevice corrosion inhibiting effect.

Similar crevice corrosion inhibiting effect can be obtained even if several oxides, nitrides and carbides are mixed together. Therefore, either a single-substance coating or a multiple-substance coating may be chosen by taking into account such factors as coating speed and cost. A coating within the specified thickness range of 1 to 100 $\mu$m may be formed either in a single layer or in multiple layers. Multi-layered coatings are more effective in inhibiting crevice corrosion because fewer defects in the coating are exposed to corrosive environment.

Some concrete examples of non-metallic coatings and their crevice corrosion resistance are given in the following.

Threaded joints were provided to the high-alloy oil-well tubes shown in Table 1. After applying the non-metallic coatings listed in Table 2 on critical portions of the threaded joints, the tubes were subjected to corrosion test. The oil-well tubes had an outside diameter of 88.9 mm and a wall thickness of 6.45 mm. The non-metallic coatings were applied by sputtering.

With specimens Nos. 1 and 7 according to this invention in Table 1 and 2, the areas from the sealing surfaces to the internal surfaces of the joint (at the tip of the pin member 11 and the base of the box member 21) were coated. With specimens Nos. 8 to 12 according to this invention, the areas from the sealing surfaces to the internal surfaces of the joint (at the tip of the pin member 11 and the base of the box member 21) and the areas at the outer end of the joint (at the base of the pin member 11 and the tip of the box member 21) were coated. With specimen No. 14 tested for comparison, the areas from the sealing surfaces to the internal surfaces of the joint were coated, but the coating did not satisfy the requirement of this invention in the asterisked (*) point. No non-metallic coating was given to specimens Nos. 13 and 15 to 17 for comparison.

After being placed in the corrosive environments shown in Table 2 for one month, the specimens were inspected for the occurrence of crevice corrosion in their joints. The corrosive environments in Table 2 were chosen depending on the corrosion resistance of the individual high-alloy oil-well tubes tested.

As is obvious from Table 2, no crevice corrosion occurred on specimens Nos. 1 to 12 whose joint clearances were coated according to this invention. By contrast, crevice corrosion occurred on specimens Nos. 13 and 15 to 17 because no protective coating was applied over the clearances and on specimen No. 14 because, though coating was applied, the coating thickness was insufficient.

This invention is by no means limited to the preferred embodiments described. The threaded joint shown in Fig. 1 has the sealing surfaces extending along the length of the tube. But this invention is also applicable to the threaded joints on such tubes whose sealing surfaces are perpendicular to or nearly perpendicular to the length thereof. The threaded joint of Fig. 1 is of the coupling type which comprises the pin member 11 on the tube 1 and the box member 21 on the shorter tube known as the coupling 2. This invention is also applicable to threaded joints of the integral type (in which connection is achieved by means of an external thread cut at one end of a tube and an internal thread cut at the other end, without using a coupling). With both types of threaded joints for high-alloy oil-well tubing, this invention provides excellent crevice corrosion resistance.

With the threaded joint shown in Fig. 1, the sealing surfaces 13 and 23 and the internal surfaces 15 and 25 at the tip of the pin member 11 and the base of the box member 21, which are exposed to the corroding environment on the inner side of the joint, are covered with non-metallic coatings 16 and 26. Also, the areas from the external surface 17 at the base of the pin member 11 and the internal surface 27 at the tip of the box member 21 to the threads 12 and 22, which are exposed to the corroding environment on the outer side of the joint, are covered with non-metallic coatings 19 and 29. But, non-metallic coating may be given only to such portions as are exposed to corrosive environment on the inner side. The threads 12 and 22 need not always be coated, as well. Whether the non-metallic coating should be applied to only the portion exposed to the corrosive environment inside a tube or both the portions exposed to the corrosive environment on the inner and outer sides may be chosen depending on the severity of the individual corrosive environment and quality of high-alloy oil-well tubing. Usually, the inner side of oil-well tubing is exposed to a severer corrosive environment. Therefore the coating must be applied at least to the portions exposed to the corrosive environment on the inner side; namely, the sealing surface 13, end face 14 and internal surface 15 at the tip of the pin member 11 and the sealing surface 23, inner end face 24 and the internal surface 25 at the base of the box member 21. But it is preferable to apply the coating also to the portions exposed to the corroding environment on the outer side where there is a chance of a concentrated

5

solution of salt (such as a 38% solution of $CaCl_2$ or a 44% solution of NaBr) used as a completion fluid of oil and gas wells (the solution surrounding the tubing) corroding the outer side of the thread. In view of the object of this invention, the non-metallic coating need not be applied to the internal and/or external surface of the oil-well tubing proper. But it may require a complex process to confine coating to the clearances, avoiding the internal and/or external surface of the tubing proper. Therefore, the coating area may include the internal and/or external surface near each end of the tubing proper. Threaded joints for high-alloy oil-well tubing in which coating is applied not only to the clearance areas but elsewhere are also, therefore, within the scope of this invention.

Table 1

| | No. | Main Constituents of High-Alloy Oil-Well Tubing | | | | | | | | (Percent by Weight) | |
|---|---|---|---|---|---|---|---|---|---|---|---|
| | | Cr | Ni | Mo | C | Si | Mn | P | S | Fe | Others |
| Specimens According to This Invention | 1 | 13.1 | 0.04 | | 0.21 | 0.35 | 0.47 | 0.015 | 0.0011 | Bal. | |
| | 2 | 9.07 | | 1.13 | | 0.25 | 0.33 | 0.012 | 0.0027 | Bal. | |
| | 3 | 22.3 | 5.71 | 3.09 | 0.017 | 0.32 | 1.40 | 0.010 | 0.0005 | Bal. | N 0.17 |
| | 4 | 25.6 | 7.30 | 3.15 | 0.013 | 0.29 | 0.31 | 0.012 | 0.0012 | Bal. | N 0.15 |
| | 5 | 21.8 | 42.2 | 3.06 | 0.023 | 0.15 | 0.24 | 0.022 | 0.0007 | Bal. | Cu 1.31, Ti 0.92 |
| | 6 | 22.7 | 49.3 | 6.42 | 0.011 | 0.28 | 0.26 | 0.020 | 0.0025 | Bal. | Cu 1.52 |
| | 7 | 21.3 | Bal. | 9.22 | 0.019 | 0.36 | 0.57 | 0.026 | 0.0033 | 4.52 | Nb 3.55 |
| | 8 | 12.7 | 0.25 | | 0.19 | 0.41 | 0.29 | 0.011 | 0.0028 | Bal. | |
| | 9 | 21.6 | 5.49 | 2.99 | 0.025 | 0.38 | 0.85 | 0.023 | 0.0009 | Bal. | N 0.18 |
| | 10 | 26.8 | 51.0 | 2.1 | 0.02 | 0.22 | 0.79 | 0.016 | 0.0015 | Bal. | N 0.12, Nb 0.8 |
| | 11 | 25.3 | 49.6 | 4.03 | 0.02 | 0.20 | 1.00 | 0.015 | 0.0004 | Bal. | Ca 0.005 |
| | 12 | 21.5 | 25.4 | 3.7 | 0.02 | 0.25 | 0.64 | 0.012 | 0.0003 | Bal | Cu 1.5 |
| Specimens Tested for Comparison | 13 | 13.0 | 0.18 | | 0.22 | 0.30 | 0.49 | 0.022 | 0.004 | Bal. | |
| | 14 | 22.5 | 5.56 | 3.03 | 0.024 | 0.38 | 1.25 | 0.021 | 0.0017 | Bal. | N 0.15 |
| | 15 | 22.7 | 5.46 | 2.85 | 0.020 | 0.26 | 1.36 | 0.019 | 0.0025 | Bal. | N 0.18 |
| | 16 | 21.3 | 25.6 | 4.06 | 0.016 | 0.07 | 0.15 | 0.011 | 0.0007 | Bal. | Ti 0.46 |
| | 17 | 20.5 | 36.2 | 2.54 | 0.015 | 0.16 | 0.49 | 0.022 | 0.0008 | Bal. | |

EP 0 329 990 B1

Table 2

| | No. | Nonmetallic Coatings | | Corrosion Test Conditions | | | | |
|---|---|---|---|---|---|---|---|---|
| | | Position of Coating | Coating Material and Thickness | Temperature (°C) | Partial Pressure of H2S (atm) | Partial Pressure of CO2 (atm) | Concentration of NaCl (%) | Occurrence of Crevice Corrosion |
| Specimens According to This Invention | 1 | Inside of the sealing surface | Al₂O₃ 1.6 µm | 100 | 0.001 | 40 | 5 | o |
| | 2 | | TiC 20 µm | 110 | 0.001 | 10 | 5 | o |
| | 3 | | TiN 15 µm | 200 | 0.1 | 20 | 10 | o |
| | 4 | | TiO₂ 85 µm | 200 | 0.1 | 20 | 10 | o |
| | 5 | | TiN 23 µm | 200 | 1 | 10 | 20 | o |
| | 6 | | ZrN 10 µm | 180 | 10 | 10 | 20 | o |
| | 7 | | TiN 10 µm+ZrN 10 µm | 200 | 20 | 20 | 20 | o |
| | 8 | | Cr₂O₃+Al₂O₃ 27 µm | 120 | 0.001 | 40 | 5 | o |
| | 9 | | AlN 35 µm | 150 | 0.2 | 40 | 10 | o |
| | 10 | | BN 18 µm | 150 | 10 | 10 | 20 | o |
| | 11 | | ZrO₂ 7 µm | 150 | 20 | 20 | 20 | o |
| | 12 | | TiN+(AlN+ZrN) 5 µm | 150 | 20 | 20 | 20 | o |
| Specimens Tested for Comparison | 13 | None | - | 150 | 0.002 | 40 | 5 | Δ |
| | 14 | Inside of the sealing surface | TiN 0.3 µm* | 100 | 0.2 | 40 | 20 | x |
| | 15 | None | - | 120 | 0.05 | 40 | 20 | x |
| | 16 | None | - | 200 | 5 | 40 | 20 | x |
| | 17 | None | - | 100 | 1 | 40 | 20 | x |

o: No crevice corrosion,  Δ: Light crevice corrosion,  x: Heavy crevice corrosion

## Claims

**1.** A joint for high-alloy oil-well tubing with high crevice corrosion resistance containing not less than 7.5% by weight of Cr having a pin member (11) and a box member (21) cut with matching threads (12, 22),

8

EP 0 329 990 B1

both members (11, 21) having sealing surfaces (13, 23) adapted to be brought into contact with each other; characterized in that

the sealing surfaces (13, 23) and the end portions of the pin and box members directly exposed to corrosive environment are covered with a coating (16,26) of 1 to 100 $\mu$m in thickness which consists of at least one of oxide ceramics, nitride ceramics and carbide ceramics.

2. A joint for high-alloy oil-well tubing according to claim 1, in which said coating (16, 26) is provided to the sealing surface (13), end face (14) and internal surface (15) at the tip of the pin member (11) and the sealing surface (23), inner end face (24) and internal surface (25) at the base of the box member (21).

3. A joint for high-alloy oil-well tubing according to claim 1, in which said coating is provided to the sealing surface (13), end face (14), internal surface (15) at the tip and external surface (17) at the base of the pin member (11) and the sealing surface (23), inner end face (24), internal surface (25) at the base, internal surface (27) at the tip and end face (28) of the box member (21).

4. A joint for high-alloy oil-well tubing according to claim 1, 2 or 3, in which said oxide ceramics consists of $TiO_2$, $Al_2O_3$, $ZrO_2$ or $Cr_2O_3$.

5. A joint for high-alloy oil-well tubing according to claim 1, 2 or 3, in which said oxide ceramics consists of a mixture of at least two substances selected from the group of $TiO_2$, $Al_2O_3$, $ZrO_2$ and $Cr_2O_3$.

6. A joint for high-alloy oil-well tubing according to claim 1, 2 or 3, in which said coating is provided in multiple layers, each layer consisting of one of $TiO_2$, $Al_2O_3$, $ZrO_2$, $Cr_2O_3$ and/or a mixture of at least two substances selected from the group of $TiO_2$, $Al_2O_3$, $ZrO_2$ and $Cr_2O_3$.

7. A joint for high-alloy oil-well tubing according to claim 1, 2 or 3, in which said nitride ceramics consists of TiN, AlN, ZrN or BN.

8. A joint for high-alloy oil-well tubing according to claim 1, 2 or 3, in which said nitride ceramics consists of a mixture of at least two substances selected from the group of TiN, AlN, ZrN and BN.

9. A joint for high-alloy oil-well tubing according to claim 1, 2 or 3, in which said coating is provided in multiple layers, each layer consisting of one of TiN, AlN, ZrN, Bn and/or a mixture of at least two substances selected from the group of TiN, AlN, ZrN and BN.

10. A joint for high-alloy oil-well tubing according to claim 1, 2 or 3, in which said carbide ceramics consists of TiC or ZrC.

11. A joint for high-alloy oil-well tubing according to claim 1, 2 or 3, in which said carbide ceramics consists of a mixture of TiC and ZrC.

12. A joint for high-alloy oil-well tubing according to claim 1, 2 or 3, in which said coating is provided in multiple layers, each layer consisting of one of TiC, ZrC and/or a mixture of TiC and ZrC.

13. A joint for high-alloy oil-well tubing according to claims 1 to 12, in which said high-alloy steel oil-well tubing contains, in percent by weight:
(a) Cr: 7.5 - 14.0%, C: 0.25% max., Si: 1% max., Mn: 2.5% max., P: 0.004% max., S: 0.02% max., and Al: 0.15% max.;
at least one of the following (b) and (c):
(b) at least one of Ni: 4% max., Mo: 2.5% max., and Cu: 1% max ;
(c) N: 0.12% max.; and
Fe and ordinarily associated impurities.

14. A joint for high-alloy oil-well tubing according to claims 1 to 12, in which said high-alloy steel oil-well tubing contains, in percent by weight:
(a) Cr: 18.5 - 28.0%, Ni: 4.5 - 9.5%, Mo: 2.5 - 5.5%, C: 0.12% max., Si: 1% max., Mn: 2.5% max., P: 0.004% max., and S: 0.02% max.;

9

at least one of the following (b) and (c):
(b) Cu: 1% max.;
(c) N: 0.20% max.; and
Fe and ordinarily associated impurities.

15. A joint for high-alloy oil-well tubing according to claims 1 to 12, in which said high-alloy steel oil-well tubing contains, in percent by weight:
(a) Cr: 14.5 - 28.0%, Ni: 20 - 62%, Mo: 2.5 - 18%, C: 0.12% max., Si: 1% max., Mn: 2.5% max., P: 0.004% max., and S: 0.02% max.;
at least one of the following (b) and (c):
(b) at least one of Cu: 1% max, Ti: 1.5% max., Nb: 5% max., and Ca: 0.02% max.;
(c) N: 0.3% max.; and
Fe and ordinarily associated impurities.

**Patentansprüche**

1. Verbinder für hochlegierte Ölbohrungsverrohrungen mit hoher Rißkorrosionsbeständigkeit und einem Cr-Gehalt von nicht weniger als 7.5 Gew.-%, welcher einen Stiftteil (11) und einen Muffenteil (21) mit aneinander angepaßten Gewinden (12, 22) aufweist, wobei beide Teile (11, 21) miteinander in Kontakt bringbare Dichtflächen (13, 23) aufweisen; dadurch gekennzeichnet, daß
die Dichtflächen (13, 23) und die der korrosiven Umgebung direkt ausgesetzten Endabschnitte des Stiftteils und des Muffenteils mit einer Beschichtung (16, 26) mit einer Dicke von 1 bis 100 $\mu$m bedeckt sind, die aus Oxidkeramik, Nitridkeramik und/oder Carbidkeramik besteht.

2. Verbinder für hochlegierte Ölbohrungsverrohrungen gemäß Anspruch 1, wobei die Beschichtung (16, 26) auf die Dichtfläche (13), Endfläche (14) und innere Oberfläche (15) an der Spitze des Stiftteils (11) und auf die Dichtfläche (23), innere Endfläche (24) und innere Oberfläche (25) am Fuß des Muffenteils (21) aufgebracht ist.

3. Verbinder für hochlegierte Ölbohrungsverrohrungen gemäß Anspruch 1, wobei die Beschichtung auf die Dichtfläche (13), Endfläche (14), innere Oberfläche (15) an der Spitze und äußere Oberfläche (17) am Fuß des Stiftteils (11) und auf die Dichtfläche (23), innere Endfläche (24), innere Oberfläche (25) am Fuß, innere Oberfläche (27) an der Spitze und Innenfläche (28) des Muffenteils (21) aufgebracht ist.

4. Verbinder für hochlegierte Ölbohrungsverrohrungen gemäß Anspruch 1, 2 oder 3, wobei die Oxidkeramik aus $TiO_2$, $Al_2O_3$, $ZrO_2$ oder $Cr_2O_3$ besteht.

5. Verbinder für hochlegierte Ölbohrungsverrohrungen gemäß Anspruch 1, 2 oder 3, wobei die Oxidkeramik aus einem Gemisch von mindestens zwei aus der aus $TiO_2$, $Al_2O_3$, $ZrO_2$ und $Cr_2O_3$ bestehenden Gruppe ausgewählten Stoffen besteht.

6. Verbinder für hochlegierte Ölbohrungsverrohrungen gemäß Anspruch 1, 2 oder 3, wobei die Beschichtung in mehreren Schichten vorgesehen ist, wobei jede Schicht aus $TiO_2$, $Al_2O_3$, $ZrO_2$ oder $Cr_2O_3$ und/oder einem Gemisch von mindestens zwei aus der aus $TiO_2$, $Al_2O_3$, $ZrO_2$ und $Cr_2O_3$ bestehenden Gruppe ausgewählten Stoffen besteht.

7. Verbinder für hochlegierte Ölbohrungsverrohrungen gemäß Anspruch 1, 2 oder 3, wobei die Nitridkeramik aus TiN, AlN, ZrN oder BN besteht.

8. Verbinder für hochlegierte Ölbohrungsverrohrungen gemäß Anspruch 1, 2 oder 3, wobei die Nitridkeramik aus einem Gemisch von mindestens zwei aus der aus TiN, AlN, ZrN und BN bestehenden Gruppe ausgewählten Stoffen besteht.

9. Verbinder für hochlegierte Ölbohrungsverrohrungen gemäß Anspruch 1, 2 oder 3, wobei die Beschichtung in mehreren Schichten vorgesehen ist, wobei jede Schicht aus TiN, AlN, ZrN oder BN und/oder einem Gemisch von mindestens zwei aus der aus TiN, AlN, ZrN und BN bestehenden Gruppe ausgewählten Stoffen besteht.

**10.** Verbinder für hochlegierte Ölbohrungsverrohrungen gemäß Anspruch 1, 2 oder 3, wobei die Carbidkeramik aus TiC oder ZrC besteht.

**11.** Verbinder für hochlegierte Ölbohrungsverrohrungen gemäß Anspruch 1, 2 oder 3, wobei die Carbidkeramik aus einem Gemisch von TiC und ZrC besteht.

**12.** Verbinder für hochlegierte Ölbohrungsverrohrungen gemäß Anspruch 1, 2 oder 3, wobei die Beschichtung in mehreren Schichten vorgesehen ist, wobei jede Schicht aus TiC oder ZrC und/oder einem Gemisch von TiC und ZrC besteht.

**13.** Verbinder für hochlegierte Ölbohrungsverrohrungen gemäß den Ansprüchen 1 bis 12, wobei die aus einem hochlegierten Stahl bestehende Ölbohrungsverrohrung folgende Bestandteile in Gew.-% enthält:
(a) Cr: 7.5 - 14.0 %, C: max. 0.25 %, Si: max. 1 %, Mn: max. 2.5 %, P: max. 0.004 %, S: max. 0.02 %, und Al: max. 0.15 %;
 mindestens einen der folgenden Bestandteile (b) und (c);
(b) mindestens einen der Bestandteile Ni: max. 4 %, Mo: max. 2.5 %, und Cu: max. 1 %;
(c) N: max. 0.12 %; und
Fe und übliche zugehörige Verunreinigungen.

**14.** Verbinder für hochlegierte Ölbohrungsverrohrungen gemäß den Ansprüchen 1 bis 12, wobei die aus einem hochlegierten Stahl bestehende Ölbohrungsverrohrung folgende Bestandteile in Gew.-% aufweist:
(a) Cr: 18.5 - 28.0 %, Ni: 4.5 - 9.5 %, Mo: 2.5 - 5.5 %, C: max. 0.12 %, Si: max. 1 %, Mn: max. 2.5 %, P: max. 0.004 %, und S: max. 0.02 %;
 mindestens einen der folgenden Bestandteile (b) und (c):
(b) Cu: max. 1 %;
(c) N: max. 0.20 %; und
Fe und übliche zugehörige Verunreinigungen.

**15.** Verbinder für hochlegierte Ölbohrungsverrohrungen gemäß den Ansprüchen 1 bis 12, wobei die aus einem hochlegierten Stahl bestehende Ölbohrungsverrohrung folgende Bestandteile in Gew.-% enthält:
(a) Cr: 14.5 - 28.0 %, Ni: 20 - 62 %, Mo: 2.5 - 18 %, C: max. 0.12 %, Si: max. 1 %, Mn: max. 2.5 %, P: max. 0.004 % und S: max. 0.02 %;
 mindestens einen der folgenden Bestandteile (b) und (c):
(b) mindestens einen der Bestandteile Cu: max. 1 %, Ti: max.1.5 %, Nb: max. 5 %, und Ca: max. 0.02 %;
(c) N: max. 0.3 %; und
Fe und übliche zugehörige Verunreinigungen.

**Revendications**

**1.** Un raccord pour ligne de tubes fortement alliés pour puits de pétrole avec une résistance élevée à la corrosion de fente, contenant pas moins de 7,5 % en poids de Cr, ayant un organe de broche (11) et un organe de carter (21) dans lesquels sont découpés des filets ajustés (12,22), les deux organes (11, 21) ayant des surfaces d'étanchéité (13, 23) adaptées pour être amenées en contact l'une avec l'autre, caractérisé en ce que les surfaces d'étanchéité (13, 23) et les portions d'extrémité des organes de broche et de carter directement exposées à un environnement corrosif sont couvertes d'un revêtement (16, 26) de 1 à 100 μm d'épaisseur qui est constitué par au moins un corps choisi parmi les céramiques oxydées, les céramiques nitrurées et les céramiques carburées.

**2.** Un raccord pour ligne de tubes fortement alliés pour puits de pétrole selon la revendication 1, dans lequel ledit revêtement (16, 26) est disposé sur la surface d'étanchéité (13), la face d'extrémité (14) et la surface interne (15) à l'extrémité de l'organe de broche (11) et sur la surface d'étanchéité (23), la face d'extrémité interne (24) et la surface interne (25) à la base de l'organe de carter (21).

**3.** Un raccord pour ligne de tubes fortement alliés pour puits de pétrole selon la revendication 1, dans lequel ledit revêtement est disposé sur la surface d'étanchéité (13), la face d'extrémité (14), la surface interne (15) à l'extrémité et sur la surface externe (17) à la base de l'organe de broche (11) et sur la surface d'étanchéité (23), la face d'extrémité interne (24), la surface interne (25) à la base, sur la surface interne (27) à l'extrémité et à la face d'extrémité (28) de l'organe de carter (21).

4. Un raccord pour ligne de tubes fortement alliés pour puits de pétrole selon la revendication 1, 2 ou 3, dans lequel ladite céramique oxydée est constituée de $Ti\, O_2$, $Al_2\, O_3$, $Zr\, O_2$ ou $Cr_2\, O_3$.

5. Un raccord pour ligne de tubes fortement alliés pour puits de pétrole selon la revendication 1, 2 ou 3, dans lequel ladite céramique oxydée est constituée d'un mélange d'au moins deux substances choisies dans le groupe constitué par $Ti\, O_2$, $Al_2\, O_3$, $Zr\, O_2$ et $Cr_2\, O_3$.

6. Un raccord pour ligne de tubes fortement alliés pour puits de pétrole selon la revendication 1, 2 ou 3, dans lequel ledit revêtement est disposé en couches multiples, chaque couche consistant en un corps choisi parmi $Ti\, O_2$, $Al_2\, O_3$, $Zr\, O_2$, $Cr_2\, O_3$ et/ou un mélange d'au moins deux substances choisies dans le groupe formé par $Ti\, O_2$, $Al_2\, O_3$, $Zr\, O_2$ et $Cr_2\, O_3$.

7. Un raccord pour ligne de tubes fortement alliés pour puits de pétrole selon la revendication 1, 2 ou 3, dans lequel ladite céramique nitrurée est constituée de $Ti\, N$, $Al\, N$, $Zr\, N$ ou $BN$.

8. Un raccord pour ligne de tubes fortement alliés pour puits de pétrole selon la revendication 1, 2 ou 3, dans lequel ladite céramique nitrurée est constituée en un mélange d'au moins deux substances choisies parmi $Ti\, N$, $AL\, N$, $Zr\, N$ et $BN$.

9. Un raccord pour ligne de tubes fortement alliés pour puits de pétrole selon la revendication 1, 2 ou 3, dans lequel ledit revêtement est disposé en couches multiples, chaque couche consistant en un corps choisi parmi $Ti\, N$, $Al\, N$, $Zr\, N$ ou $BN$ et/ou au moins deux substances choisies dans le groupe formé par $Ti\, N$, $Al\, N$, $Zr\, N$ et $BN$.

10. Un raccord pour ligne de tubes fortement alliés pour puits de pétrole selon la revendication 1, 2 ou 3, dans lequel ladite céramique carburée est constituée de $Ti\, C$ ou $Zr\, C$.

11. Un raccord pour ligne de tubes fortement alliés pour puits de pétrole selon la revendication 1, 2 ou 3, dans lequel ladite céramique carburée consiste en un mélange de $Ti\, C$ et $Zr\, C$.

12. Un raccord pour ligne de tubes fortement alliés pour puits de pétrole selon la revendication 1, 2 ou 3, dans lequel ledit revêtement est disposé en couches multiples, chaque couche étant constituée d'un corps choisi parmi $Ti\, C$, $Zr\, C$ et/ou un mélange de $Ti\, C$ et $Zr\, C$.

13. Un raccord pour ligne de tubes fortement alliés pour puits de pétrole selon les revendications 1 à 12, dans lequel ladite ligne de tubes fortement alliés pour puits de pétrole contient, en pour-cent en poids :
    (a) Cr : 7,5 - 14,0 % ; C : 0,25 % max ; Si : 1 % max ; Mn : 2,5 % max ; P : 0,004 % max ; S : 0,02 % max et Al : 0,15 % max ;
    au moins l'un des (b) et (c) suivants :
    (b) au moins un corps parmi Ni : 4 % max ; Mo : 2,5 % max et Cu : 1 % max ;
    (c) N : 0,12 % max ; et
    Fe et les impuretés ordinairement associées.

14. Un raccord pour ligne de tubes fortement alliés pour puits de pétrole selon les revendications 1 à 12, dans lequel ladite ligne de tubes fortement alliés pour puits de pétrole contient, en pour-cent en poids :
    (a) Cr : 18,5 - 28,0 % ; Ni : 4,5 - 9,5 % ; Mo : 2,5 - 5,5 % ; C : 0,12 % max ; Si : 1 % max ; Mn : 2,5 % max ; P : 0,004 % max et S : 0,02 % max ;
    au moins l'un des (b) et (c) suivants :
    (b) Cu : 1 % max ;
    (c) N : 0,20 % max ; et
    Fe et les impuretés ordinairement associées.

15. Un raccord pour ligne de tubes fortement alliés pour puits de pétrole selon les revendications 1 à 12, dans lequel ladite ligne de tubes fortement alliés pour puits de pétrole contient, en pour-cent en poids :
    (a) Cr : 14,5 - 28,0 % ; Ni : 20 - 62 % ; Mo : 2,5 - 18 % ; C : 0,12 % max ; Si : 1 % max ; Mn : 2,5

% max ; P : 0,004 % max et S : 0,02 % max ;
au moins un parmi (b) et (c) suivants :
(b) au moins un corps choisi parmi Cu : 1 % max ; Ti : 1,5 % max ; Nb : 5 % max et Ca : 0,02 % max ;
(c) N : 0,3 % max ; et
Fe et les impuretés ordinairement associées.

FIG. 1

FIG. 2

FIG. 3